# EUROPEAN PATENT APPLICATION

(11) **EP 3 187 466 A1**
(43) Date of publication of application: **05.07.2017**
(21) Application number: 15836027.1
(22) Date of filing: 27.08.2015
(51) Int. Cl.: C02F 1/32, B01D 33/06, B63B 13/00

(54) **BALLAST WATER TREATMENT SYSTEM AND BALLAST WATER TREATMENT METHOD**

(30) Priority: 29.08.2014 JP 2014175883
(71) Applicant: Sumitomo Electric Industries, Ltd., Osaka-shi, Osaka 541-0041 (JP)
(72) Inventor: HARADA, Ryoji, Osaka-shi Osaka 554-0024 (JP); UEYAMA, Munetsugu, Osaka-shi Osaka 554-0024 (JP); MIYATAKE, Kenichiro, Osaka-shi Osaka 554-0024 (JP); HAHAKURA, Shuji, Osaka-shi Osaka 554-0024 (JP)
(74) Representative: Boult Wade Tennant
(86) International application number: PCT/JP2015/074171
(87) International publication number: WO 2016/031900

(57) **Abstract**

There is provided a ballast water treatment system and method that allows ballast water which is to be purified to receive a prescribed dose of ultraviolet rays even when the ballast water varies in transmittance. A ballast water treatment system (10) includes an ultraviolet irradiation device (23) which irradiates ballast water flowing through a treatment line (a pipe (34, 36)) with ultraviolet rays, and a control unit (100). The ultraviolet irradiation device (23) includes a light source which emits ultraviolet rays, and an illuminance sensor sensing an illuminance of ultraviolet rays received by the ballast water. The control unit (100) controls the ultraviolet irradiation device (23) to maintain at a prescribed dose a dose calculated using an illuminance (I) sensed by the illuminance sensor and a flow rate of ballast water which flows through the ultraviolet irradiation device (23). When the sensed dose cannot be maintained at the prescribed dose by controlling the ultraviolet irradiation device (23), the control unit (100) reduces a treatment flow rate of the ballast water which flows through the treatment line.

## Description

### TECHNICAL FIELD

The present invention relates to a system and method for treating ballast water to be stored in a ship.

### BACKGROUND ART

Ballast water is loaded into a ship in order to maintain the hull's posture or draft in a safe condition. For example, after a freight is unloaded from a ship at a place where the freight is exported, water (sea water, fresh water, or brackish water) around the ship is taken and loaded into the ship as ballast water. The ballast water stored in the ship is discharged overboard at a port of call.

For a ship on an international voyage, a sea area where ballast water is taken may be different from a sea area where the ballast water is discharged. When an organism lives in the ballast water, and the ballast water is discharged from the ship, the organism is moved to a sea area which is not its habitat. The discharged ballast water may thus have a negative effect on the sea area's ecosystem.

To avoid this problem, an apparatus and method for purifying ballast water has been proposed. For example, Japanese Patent Laying-Open No. 2013-126622 (patent document 1) discloses a ballast water treatment system which contemplates efficiently removing, killing or deactivating a microorganism from ballast water. This system includes a filter device and an ultraviolet irradiation device. When taking sea water from the ocean into a ship, the filter device filtrates the sea water. The ultraviolet irradiation device irradiates with ultraviolet rays the sea water filtrated by the filter device. The sea water having undergone ultraviolet irradiation is sent as ballast water to a tank in the ship and stored in the tank.

Japanese Patent Laying-Open No. 2013-23187 (patent document 2) discloses controlling a ballast water treatment device. Before an ultraviolet lamp's illuminance attains a prescribed illuminance, treated water is discharged overboard by an overboard discharging means. Once the ultraviolet lamp's illuminance attains the prescribed illuminance, treated water is introduced into a ballast tank.

### CITATION LIST

### PATENT DOCUMENTS

Patent document 1: Japanese Patent Laying-Open No. 2013-126622
Patent document 2: Japanese Patent Laying-Open No. 2013-23187

### SUMMARY OF INVENTION

### TECHNICAL PROBLEM

A ship on an international voyage (an oceangoing ship) calls in in various sea areas in the world. Accordingly, the ship takes ballast water in various sea areas. For this reason, the oceangoing ship is required to have a ballast water treatment system mounted therein that can purify sea water taken from any sea area.

In a process for purifying sea water by ultraviolet irradiation, when the sea water has lower transmittance, the dose of ultraviolet rays received by the sea water is more easily reduced. When the dose of ultraviolet irradiation is reduced, an effect of killing a microorganism which lives in the taken sea water may be reduced sea water's transmittance can vary with in which sea area the sea water is taken or natural environmental factors (weather or climate etc.) etc. It is thus difficult to previously determine the value in transmittance of sea water to be subjected to an ultraviolet treatment.

In order to increase the dose of ultraviolet rays received by sea water having low transmittance, for example increasing an ultraviolet irradiation device's output may be considered. Specifically, the ultraviolet irradiation device is supplied with increased electric power. However, due to a factor such as a rating of the ultraviolet irradiation device, there is an upper limit for electric power which may be supplied to the ultraviolet irradiation device. When the sea water has a significantly low transmittance, then, even with the ultraviolet irradiation device maximized in power, the sea water may receive an insufficient dose of ultraviolet rays.

From a viewpoint of an effect on the ecosystem, it is not desirable to load untreated or insufficiently purified sea water as ballast water into a ship. However, if for that reason a ballast water purification treatment is stopped, ballast water cannot be loaded into the ship.

Note that it is believed that there is a possibility that a ship on voyage which loads brackish water or fresh water as ballast water therein may also suffer a reduced dose of ultraviolet rays as the water obtained as the ballast water has low transmittance.

An object of the present invention is to provide a ballast water treatment system and method that allows ballast water which is to be purified to receive a prescribed dose of ultraviolet rays even when the ballast water varies in transmittance.

### SOLUTION TO PROBLEM

A ballast water treatment apparatus according to one manner of the present invention is a ballast water treatment system for treating ballast water for a ship and includes an ultraviolet irradiation device irradiating ballast water flowing through a treatment line with ultraviolet rays. The ultraviolet irradiation device includes a light source which emits ultraviolet rays, and a sensor sensing an illuminance of ultraviolet rays received by the ballast water. The ballast water treatment system further includes a control unit. The control unit controls the ultraviolet irradiation device to maintain at a prescribed dose a dose calculated using an illuminance sensed by the sensor and a flow rate of the ballast water flowing through the ultraviolet irradiation device, and when the calculated dose cannot be maintained at the prescribed dose by controlling the ultraviolet irradiation device, the control unit reduces a treatment flow rate of the ballast water flowing through the treatment line.

A ballast water treatment method according to one manner of the present invention is a ballast water treatment method treating ballast water for a ship by using an ultraviolet irradiation device provided to a treatment line for the ballast water and including a light source emitting ultraviolet rays and a sensor sensing an illuminance of ultraviolet rays received by the ballast water. The ballast water treatment method includes: controlling the ultraviolet irradiation device to maintain at a prescribed dose a dose calculated using an illuminance sensed by the sensor and a flow rate of the ballast water flowing through the ultraviolet irradiation device; and reducing a treatment flow rate of the ballast water flowing through the treatment line, when the calculated dose cannot be maintained at the prescribed dose by controlling the ultraviolet irradiation device.

### ADVANTAGEOUS EFFECT OF INVENTION

The above allows ballast water to receive a prescribed dose of ultraviolet rays even when the ballast water varies in transmittance.

### BRIEF DESCRIPTION OF DRAWINGS

Fig. 1 is a schematic diagram showing a ship having mounted therein a ballast water treatment system according to one embodiment of the present invention.
Fig. 2 is a schematic diagram showing a configuration of a ballast water treatment system according to one embodiment of the present invention.
Fig. 3 is a diagram for illustrating filling a tank with water and discharging water by a ballast water treatment system 10 shown in Fig. 2.
Fig. 4 illustrates a first starting process in filling a tank with water.
Fig. 5 illustrates a second starting process in filling a tank with water.
Fig. 6 illustrates switching from a third starting process to filling a tank with water.
Fig. 7 illustrates a first ending process in filling a tank with water.
Fig. 8 illustrates a second ending process in filling a tank with water.
Fig. 9 illustrates a first starting process in discharging water.
Fig. 10 illustrates a second starting process in discharging water.
Fig. 11 illustrates an ending process in discharging water.
Fig. 12 illustrates an exemplary configuration of a filtration device 22 shown in Fig. 2.
Fig. 13 is a cross section taken along a line V-V shown in Fig. 4.
Fig. 14 is a perspective schematic view for illustrating a representative configuration of a filter 61 shown in Fig. 4.
Fig. 15 is a diagram showing an exemplary configuration of ultraviolet irradiation device 23 shown in Fig. 2.
Fig. 16 is a flowchart for illustrating how a treatment flow rate is controlled according to a first embodiment.
Fig. 17 is a schematic diagram showing data of a corrected treatment flow rate stored in a ballast water treatment control unit 111.
Fig. 18 is a flowchart for describing how a discharged water flow rate of filtration device 22 is controlled in filling a tank with water.
Fig. 19 is a flowchart for illustrating how a treatment flow rate is controlled according to a second embodiment.

### DESCRIPTION OF EMBODIMENTS

### [Description of Embodiment of the Present Invention]

Initially, embodiments of the present invention will be enumerated and described. Note that in any embodiment described hereinafter, the term "ballast water" is a term collectively indicating water taken from the surroundings of a ship, water stored in a ballast tank, and water discharged overboard from a tank when it is not necessary to distinguish them.
(1) A ballast water treatment apparatus according to one manner of the present invention is a ballast water treatment system (10) for treating ballast water for a ship (1) and includes an ultraviolet irradiation device (23) irradiating ballast water flowing through a treatment line (34, 36) with ultraviolet rays. Ultraviolet irradiation device (23) includes a light source (142) which emits ultraviolet rays, and an illuminance sensor (144) sensing an illuminance of ultraviolet rays received by ballast water. Ballast water treatment system (10) further includes a control unit (100). Control unit (100) controls ultraviolet irradiation device (23) to maintain at a prescribed dose (B) a dose (D) calculated using illuminance (I) sensed by illuminance sensor (144) and a flow rate of ballast water which flows through ultraviolet irradiation device (23), and when calculated dose (D) cannot be maintained at prescribed dose (B) by controlling ultraviolet irradiation device (23), control unit (100) reduces a treatment flow rate of ballast water which flows through treatment line (34, 36).
   This configuration allows ballast water to receive a prescribed dose of ultraviolet rays even when the ballast water varies in transmittance. When ballast water is reduced in transmittance, the dose of ultraviolet rays received by the ballast water is reduced. Control unit controls ultraviolet irradiation device (23) to maintain at a prescribed dose a dose calculated using illuminance (I) sensed by a sensor and a flow rate of ballast water which flows through ultraviolet irradiation device (23) (for example, the ultraviolet irradiation device's output is increased). However, when the ballast water's transmittance is low, the calculated dose may not be maintainable at the prescribed dose by controlling the ultraviolet irradiation device. For example, even when the ultraviolet irradiation device outputs maximum power, the calculated dose may not reach the prescribed dose. In such a case, a treatment flow rate of ballast water which flows through the treatment line is reduced. By reducing the flow rate of the ballast water, the dose of ultraviolet rays received by the ballast water can be increased. This allows the ballast water to receive the prescribed dose of ultraviolet rays.
   "Allowing ballast water to receive a prescribed dose of ultraviolet rays" means that the ballast water receives at least the prescribed dose of ultraviolet rays. Accordingly, reducing the ballast water's treatment flow rate may result in the ballast water receiving a dose of ultraviolet rays exceeding the prescribed dose.
   In one embodiment, a "prescribed dose" is a dose of ultraviolet rays required to kill a microorganism which lives in ballast water. This "prescribed dose" can be obtained for example through an experiment.
(2) Preferably, control unit (100) varies the ballast water's treatment flow rate depending on calculated dose (D).
   According to this configuration, ballast water's treatment flow rate can be controlled to be an appropriate flow rate for ensuring the prescribed dose.
(3) Preferably, when control unit (100) reduces the ballast water's treatment flow rate, control unit (100) maximizes an output of ultraviolet irradiation device (23).
   According to this configuration, the ballast water's treatment flow rate is reduced and in addition thereto the ultraviolet irradiation device's output is maximized. This can provide a maximum ballast water flow rate allowing the prescribed dose to be maintained in the ultraviolet irradiation device constantly for any transmittance.
(4) Preferably, control unit (100) seamlessly varies the treatment flow rate.
   This configuration ensures that a maximum ballast water flow rate can be provided which allows the prescribed dose to be maintained in the ultraviolet irradiation device constantly for any transmittance, depending on the calculated dose.
(5) Preferably, control unit (100) determines, based on calculated dose (D), a treatment flow rate level among a plurality of levels and controls a treatment flow rate to be a flow rate corresponding to the determined level.
   According to this configuration, the control unit varies a treatment flow rate in multiple stages. This can simplify controlling the treatment flow rate.
(6) Preferably, control unit (100) determines whether the treatment flow rate is decreased or increased to maintain calculated dose (D) at the prescribed dose. Furthermore, preferably, calculated dose (D) when the treatment flow rate is increased is larger than the prescribed dose.
   According to this configuration, whether a treatment flow rate is decreased or increased can be determined in order to provide an appropriate flow rate while causing a value of dose (D) calculated from illuminance (I) and a flow rate (F2) (= A, A1, or A2) to maintain a prescribed dose (a previously set reference dose). Furthermore, the dose of ultraviolet rays received by the ballast water can also be maintained at the prescribed dose when a treatment flow rate is reduced and thereafter returned to the treatment flow rate (or increased). By increasing a treatment flow rate, there is a possibility of a reduced dose of ultraviolet rays. The treatment flow rate is increased when the calculated dose reaches a value larger than that of the prescribed dose. Accordingly, the dose of ultraviolet rays received by the ballast water can be maintained at the prescribed dose when the treatment flow rate is increased.
(7) Preferably, ballast water treatment system (10) further includes a filtration device (22) provided to treatment line (34, 36) and filtrating ballast water supplied to ultraviolet irradiation device (23). Filtration device (22) includes: a filter (61) cylindrically disposed to surround an axis (C), provided to rotate about the axis as desired, and filtrating ballast water; a nozzle for water to be treated (62) which causes ballast water to flow out to an outer peripheral portion of filter (61); a filtrated water channel (64) for supplying ballast water having been filtrated by filter (61) to ultraviolet irradiation device (23); a discharge channel (65) for discharging water which is not filtrated by filter (61); and a motor (90) for rotating filter (61) about the axis. Control unit (100) varies a discharged water flow rate of water that flows through discharge channel (65), depending on the treatment flow rate.
   According to this configuration, the filtration device can cause ballast water to flow, through the nozzle for water to be treated, out to an outer peripheral portion of the filter while the filter is rotating, so that the filtration device can filtrate the ballast water and at the same time wash the filter. The ability to wash the filter depends on the flow rate of ballast water flowing out through the nozzle for water to be treated. The flow rate of ballast water flowing out through the nozzle for water to be treated is determined by the treatment flow rate and the discharged water flow rate. The ability to wash the filter is ensured by varying the discharged water flow rate depending on the treatment flow rate.
(8) Preferably, control unit (100) varies the discharged water flow rate such that a total of the treatment flow rate and the discharged water flow rate is fixed.
   According to this configuration, even when the treatment flow rate varies, a fixed amount of ballast water can be introduced into the filtration device. Accordingly, the flow rate of ballast water flowing out through the nozzle for water to be treated can be maintained at a fixed flow rate. This ensures the ability to wash the filter.
(9) A ballast water treatment method according to one manner of the present invention is a ballast water treatment method treating ballast water for a ship (1) by using an ultraviolet irradiation device (23) provided to a ballast water treatment line (34, 36) and including a light source (142) emitting ultraviolet rays and an illuminance sensor (144) sensing an illuminance of ultraviolet rays received by the ballast water. The ballast water treatment method includes: controlling ultraviolet irradiation device (23) to maintain at a prescribed dose (B) a dose (D) calculated using illuminance (I) sensed by illuminance sensor (144) and a flow rate of ballast water flowing through ultraviolet irradiation device (23) (ST1); and reducing a treatment flow rate of ballast water flowing through the treatment line (34, 36), when calculated dose (D) cannot be maintained at prescribed dose (B) by controlling ultraviolet irradiation device (23) (ST8,ST21,ST31).

This configuration allows ballast water to receive a prescribed dose of ultraviolet rays even when the ballast water varies in transmittance,

### [Detailed Description of Embodiments of the Present Invention]

The present invention will now be described in embodiments hereinafter in detail with reference to the drawings. In the figures, identical or corresponding components are identically denoted and will not be described repeatedly.

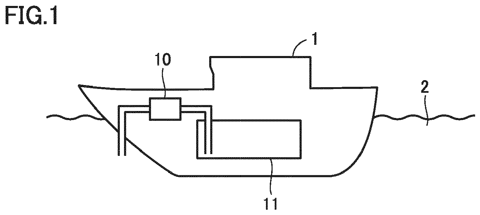

Fig. 1 is a schematic diagram showing a ship having mounted therein a ballast water treatment system according to one embodiment of the present invention. With reference to Fig. 1, ship 1 has a ballast water treatment system 10 according to one embodiment of present invention, and a tank 11 for storing ballast water. When loading tank 11 with ballast water, ballast water treatment system 10 takes sea water from a sea area 2 as ballast water. Ballast water treatment system 10 purifies the taken sea water. Specifically, ballast water treatment system 10 initially filtrates the sea water. Subsequently, ballast water treatment system 10 irradiates the filtrated sea water with ultraviolet rays to perform a process for killing a microorganism in the ballast water. The sea water having undergone the killing process (or ultraviolet irradiation) is stored to tank 11 as ballast water.

The ballast water stored in tank 11 is discharged to sea area 2 at a port at which ship 1 stops. In this embodiment, when ballast water treatment system 10 discharges ballast water from tank 11 to sea area 2, it purifies that ballast water. Specifically, ballast water treatment system 10 irradiates the ballast water that is pumped up from tank 11 with ultraviolet rays, and ballast water treatment system 10 subsequently discharges the ballast water to sea area 2.

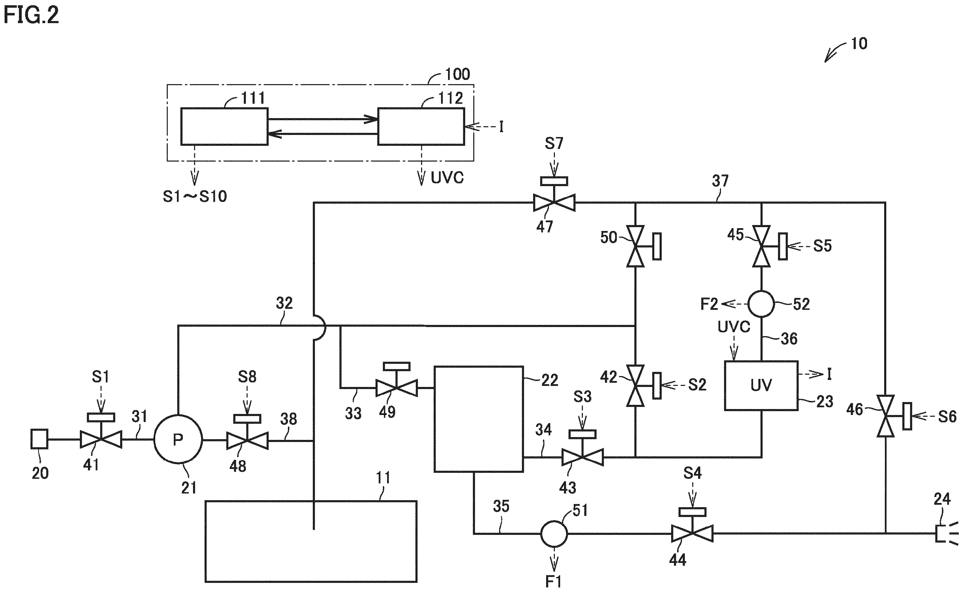

Fig. 2 is a schematic diagram showing a configuration of a ballast water treatment system according to one embodiment of the present invention. With reference to Fig. 2, ballast water treatment system 10 includes a ballast pump 21, a filtration device 22, an ultraviolet irradiation device 23, pipes 31-38, valves 41-50, flowmeters 51 and 52, and a control unit 100. Pipes 31-38, filtration device 22, and ultraviolet irradiation device 23 configure a treatment line for ballast water treated by ballast water treatment system 10. In particular, pipes 34 and 36 configure a treatment line for a purification process done by ultraviolet irradiation device 23.

When ballast pump 21 stores ballast water to tank 11, it pumps up sea water from a sea area (sea area 2 shown in Fig. 1, which will also apply hereinafter). On the other hand, when ballast pump 21 discharges ballast water from tank 11 overboard, it pumps up the ballast water from tank 11.

Filtration device 22 is connected to the treatment line and filtrates sea water taken from a sea area. Accordingly filtration device 22 includes a filter. The configuration of filtration device 22 will be described more specifically hereinafter. The filtrated sea water is supplied to ultraviolet irradiation device 23.

Ultraviolet irradiation device 23 irradiates water to be treated, or ballast water, with ultraviolet rays to kill a microorganism contained in the ballast water. When discharging ballast water from tank 11 overboard, ultraviolet irradiation device 23 irradiates ballast water pumped up from tank 11 by ballast pump 21 with ultraviolet rays.

Pipe 31 is connected to a sea chest (a water suction port) 20 and a water intake port of ballast pump 21 to configure a path for sending sea water to ballast pump 21 from a sea area. Pipe 32 is connected to a discharge port of ballast pump 21 and pipe 34 to configure a path for sending out ballast water from ballast pump 21.

Pipe 33 branches from pipe 32 and is connected to a channel for filtration device 22 for water to be treated. Pipe 33 configures a path for introducing ballast water into filtration device 22. Pipe 34 is connected to a filtrated water channel of filtration device 22 and a water intake port of ultraviolet irradiation device 23 to configure a path for supplying ultraviolet irradiation device 23 with the ballast water filtrated by filtration device 22. Pipe 35 configures a path for returning to a sea area sea water which has not been filtrated by filtration device 22 or sea water containing living things (such as an organism, particles, etc.) etc. removed from the filter by washing the filter. The sea water passes through pipe 35 and is returned to the sea area via a water discharge port 24.

Pipe 36 is connected to the outlet of ultraviolet irradiation device 23 and pipe 37 to configure a path for sending out ballast water from ultraviolet irradiation device 23. Pipe 37 configures two paths which pass ballast water irradiated with ultraviolet rays in ultraviolet irradiation device 23. One path is a path from ultraviolet irradiation device 23 to tank 11 and used when ballast water is stored to tank 11. The other path is a path connected from ultraviolet irradiation device 23 to pipe 35 and for example used when ballast water is discharged from tank 11 overboard.

Pipe 38 is connected to the water intake port of ballast pump 21 and pipe 37. Pipe 38 configures a path for passing ballast water pumped up from tank 11 by ballast pump 21. Pipe 38 and pipe 32 configure a bypass path for detouring around filtration device 22 to pass ballast water stored in tank 11 to ultraviolet irradiation device 23.

Valves 41-50 have their degrees of opening varied as controlled in response to signals S1-S10, respectively. By controlling the degrees of opening of valves 41-50, a flow rate of ballast water treated or a flow rate of sea water discharged from filtration device 22 via pipe 35 can be controlled. Valves 41-50 can all or partially be proportional control valves. Furthermore, valves 41, 46-48, and 50 may be manual valves.

Valves 41, 42, 43, 44, 45, 48, and 49 are provided to pipes 31, 32, 34, 35, 36, 38, and 33, respectively. Valve 46 is provided to pipe 37 at a portion through which ballast water discharged from tank 11 passes. More specifically, valve 46 is provided to pipe 37 at a portion extending from a portion where pipes 36 and 37 are connected together to a portion where pipes 35 and 37 are connected together. Valve 47 is provided to pipe 37 at a portion provided for sending ballast water from ultraviolet irradiation device 23 to tank 11. In other words, valve 46 is provided to pipe 37 at a portion extending from a portion where pipes 36 and 37 are connected together to tank 11.

Valve 47 is a valve for switching a path of water treated by ultraviolet irradiation device 23 between first and second paths formed by pipe 37. The first path is a path from ultraviolet irradiation device 23 to tank 11. When water treated by ultraviolet irradiation device 23 passes through the first path, the treated water is stored to tank 11 as ballast water. The second path is a path from ultraviolet irradiation device 23 to water discharge port 24. Water which passes through the second path is discharged outside ship 1 from water discharge port 24. Valve 50 is provided to a pipe which connects pipe 32 and pipe 37. Valve 50 is for controlling opening and closing a bypass line of filtration device 22 and ultraviolet irradiation device 23 used for an emergency etc.

Flowmeter 51 is provided to pipe 35 and measures a flow rate of sea water discharged from filtration device 22 to a sea area. Flowmeter 51 outputs a signal which indicates the measured flow rate, F1. The flow rate measured by flowmeter 51 is referred in the present embodiment as a "discharged water flow rate."

Flowmeter 52 is provided to pipe 36 and measures a flow rate of ballast water which passes through ultraviolet irradiation device 23. Flowmeter 52 outputs a signal which indicates the measured flow rate, F2. The flow rate measured by flowmeter 52 is referred in the present embodiment as a "treatment flow rate."

Control unit 100 generally controls ballast water treatment system 10. In this embodiment, control unit 100 includes a ballast water treatment control unit 111 and an ultraviolet irradiation control unit 112. Ballast water treatment control unit 111 and ultraviolet ray irradiation control unit 112 are configured to be able to communicate with each other. Note that ballast water treatment control unit 111 and ultraviolet irradiation control unit 112 may be integrated into a single control device.

Ballast water treatment control unit 111 controls a treatment flow rate. In addition, when storing ballast water to tank 11, ballast water treatment control unit 111 controls a discharged water flow rate. Accordingly, ballast water treatment control unit 111 obtains values of flow rates F1 and F2 based on signals output from flowmeters 51 and 52, respectively. Ballast water treatment control unit 111 outputs signals S1-S10 based on the values of flow rates F 1 and F2. Signals S1-S10 are signals for controlling valves 41-50, respectively. In addition to valves 41-48, ballast water treatment control unit 111 may control ballast pump 21 and filtration device 22.

Ultraviolet irradiation control unit 112 controls ultraviolet irradiation device 23. Accordingly, ultraviolet irradiation control unit 112 transmits a signal UVC to ultraviolet irradiation device 23. Specifically, ultraviolet irradiation control unit 112 controls ultraviolet irradiation device 23 to allow ballast water to be irradiated with ultraviolet rays in a dose maintained as prescribed. Ultraviolet irradiation device 23 senses illuminance I of ultraviolet rays received by the ballast water, and transmits to ultraviolet irradiation control unit 112 a signal indicative of illuminance I as sensed. Ultraviolet irradiation control unit 112 calculates dose D using flow rate F2 and illuminance I. Dose D is calculated according to the following expression: D = K x I/F2, where K represents a coefficient.

Hereinafter, an operation of ballast water treatment system 10 shown in Fig. 2 will be described more specifically. In the following discussion, "filling a tank with water" means introducing ballast water into tank 11 and filling tank 11 with the ballast water.

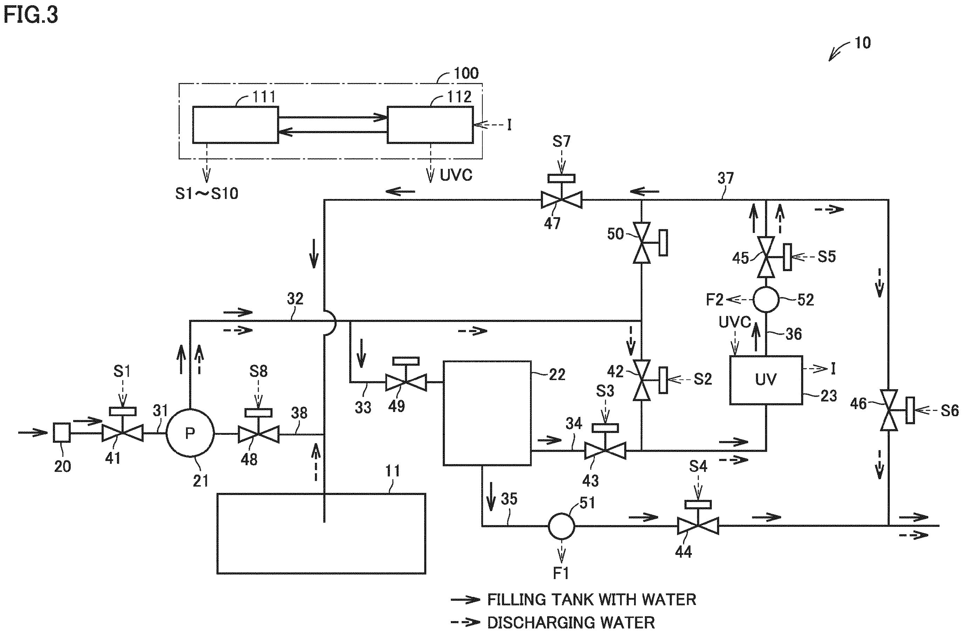

Fig. 3 is a diagram for illustrating filling a tank with water and discharging water by a ballast water treatment system 10 shown in Fig. 2. With reference to Fig. 3, in filling a tank with water, valves 41, 43, 44, 45, 47, and 49 are opened, whereas valves 42, 46, 48, and 50 are closed. From a sea area through sea chest 20 and pipe 31, sea water is taken to serve as ballast water. The ballast water is supplied by ballast pump 21 to filtration device 22 via pipes 32 and 33.

Filtration device 22 passes the ballast water through the filter to thus filtrate the ballast water. The filtrated ballast water is supplied to ultraviolet irradiation device 23 via pipe 34.

By the filtration, living things or particles etc. adhere to the filter. In this embodiment, filtration device 22 can wash the filter simultaneously with filtrating the ballast water. As the filter is washed, the living things or particles etc. are removed from the filter and discharged to a sea area via pipe 35.

Ultraviolet irradiation device 23 irradiates the ballast water supplied via pipe 34 with ultraviolet rays. By irradiating the filtrated ballast water with ultraviolet rays, an effect of killing a microorganism can be obtained even with a small ultraviolet lamp used. Using the small ultraviolet lamp allows the ultraviolet irradiation device to be miniaturized and a current consumption to be saved etc. advantageously.

After the ballast water is irradiated with ultraviolet rays, the ballast water is sent to tank 11 via pipes 36 and 37. Flowmeter 52 measures the flow rate of the ballast water flowing through pipe 36, i.e., a treatment flow rate. The ballast water purified by filtration device 22 and ultraviolet irradiation device 23 is stored to tank 11.

In contrast, when ballast water is discharged from tank 11, valves 42, 45, 46, and 48 are opened, whereas valves 41, 43, 44, 47, 49, and 50 are closed. The ballast water stored in tank 11 is pumped up by ballast pump 21 via pipe 38. Ballast pump 21 supplies the ballast water to ultraviolet irradiation device 23 via pipes 32 and 34.

Ultraviolet irradiation device 23 irradiates with ultraviolet rays the ballast water supplied via pipe 34. The ballast water having passed through ultraviolet irradiation device 23 is discharged to a sea area via pipe 37 and pipe 35.

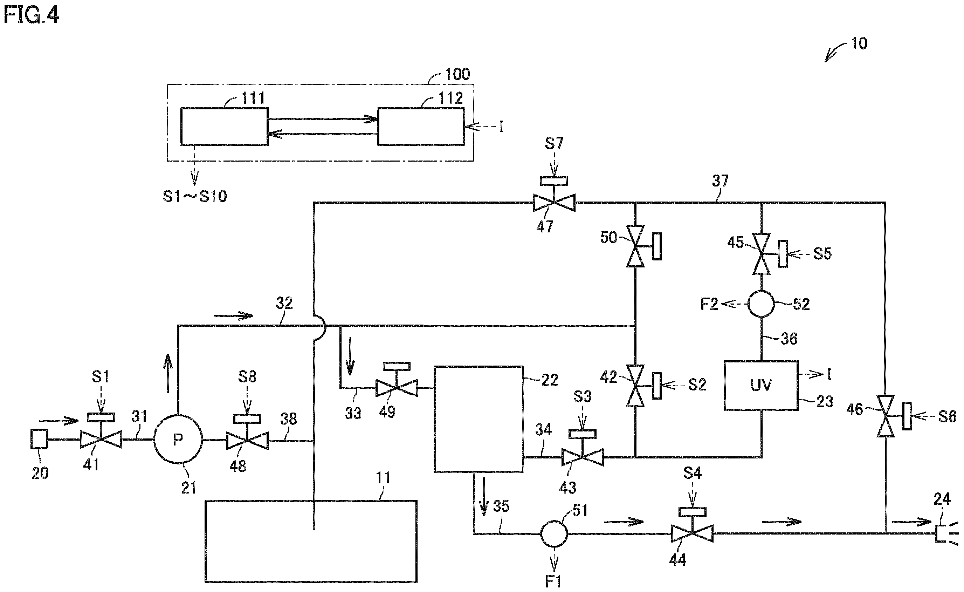

Hereinafter, a process for filling a tank with water will more specifically be described. Fig. 4 illustrates a first starting process in filling a tank with water. With reference to Fig. 4, ballast water treatment control unit 111 opens valves 41, 49, and 44 and also operates ballast pump 21. Valves 42, 43, 45-48, and 50 are in a closed state. Sea water is taken from a sea area via sea chest 20, passes through pipes 31 and 32 and is sent to filtration device 22. The sea water passes through filtration device 22 and is discharged to the sea area via pipe 35 and water discharge port 24.

When a ballast water treatment is not performed for a long period of time, sea water which remains inside a pipe or the filtration device may corrode. Or air may be introduced into a pipe. Corrosion of sea water or introduction of air into a pipe can be a cause of reducing transmittance of sea water. When sea water has a low transmittance, then in ultraviolet irradiation device 23 there is a possibility that a sufficient dose cannot be obtained. Or corroded sea water may clog the filter. Ballast water treatment control unit 111 performs the first starting process, as described above, for a predetermined period of time. Thus, the filter of filtration device 22 is washed and pipes 31, 32, 33, and 35 are flushed. The above described issue can thus be solved.

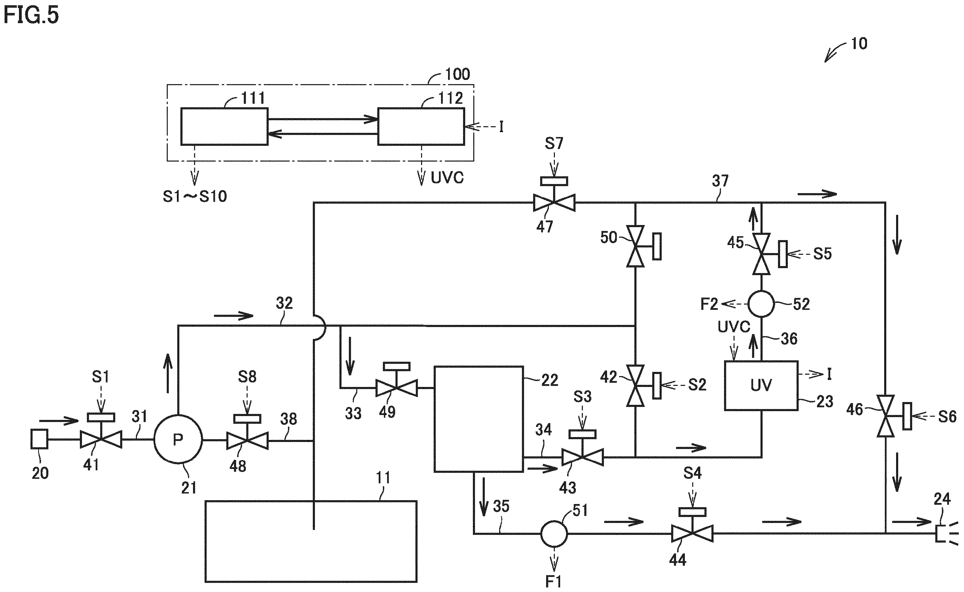

The process shown in Fig. 4 is followed by a second starting process. Fig. 5 illustrates the second starting process in filling a tank with water. With reference to Fig. 5, after the flushing is performed for the fixed period of time, ballast water treatment control unit 111 opens valves 43, 45, and 46. Filtration device 22 filtrates sea water. The filtrated sea water is sent to ultraviolet irradiation device 23 through pipe 34.

Ultraviolet irradiation control unit 112 turns on an ultraviolet lamp of ultraviolet irradiation device 23. Flowmeter 52 measures a flow rate F2 of the filtrated water which flows through ultraviolet irradiation device 23. Ballast water treatment control unit 111 operates in response to the measured flow rate F2 to control the flow rate of the filtrated water that flows through ultraviolet irradiation device 23 to be a prescribed flow rate.

Ultraviolet irradiation control unit 112 calculates dose D using flow rate F2 and illuminance I. Before the calculated dose reaches the prescribed dose, the obtained sea water passes through the second path and is discharged overboard. Ultraviolet irradiation control unit 112 can transmit signal UVC to ultraviolet irradiation device 23 to control ultraviolet irradiation device 23 so that the calculated dose reaches the prescribed value. When sea water has passed through the second path for a fixed period of time and the calculated dose still does not reach the prescribed value, ballast water treatment control unit 111 reduces the flow rate of the filtrated water that passes through ultraviolet irradiation device 23 until the calculated dose reaches the prescribed value. In other words, in the second starting process, control unit 100 controls ultraviolet irradiation device 23 to maintain the calculated dose at the prescribed dose. When sea water has passed through the second path for the fixed period of time, and the calculated dose cannot be maintained at prescribed dose B by controlling ultraviolet irradiation device 23, control unit 100 reduces a treatment flow rate of ballast water which flows through the treatment line (pipes 34, 36).

Illuminance I depends on the transmittance of a fluid which flows through ultraviolet irradiation device 23. Illuminance I never reaches a prescribed value until the transmittance of sea water flowing through ultraviolet irradiation device 23 increases to a prescribed value. Furthermore, it cannot happen in reality that the transmittance of the sea area around a ship increases for a short period of time. Accordingly, when control is done based on illuminance I, filling a tank with water may not be able to be actually started.

In contrast, this embodiment ensures dose D. Dose D is a product of an illuminance and a flow rate. Even when sea area has low transmittance, a prescribed dose can be ensured by varying (or reducing) sea water's flow rate. This allows filling tank 11 with water to be started.

Subsequently, a third starting process is performed. Ultraviolet irradiation control unit 112 confirms that dose D has reached the prescribed dose. Ballast water treatment control unit 111 confirms that untreated water which remains in a pipe extending from ultraviolet irradiation device 23 to water discharge port 24 (i.e., pipe 36 and a portion of pipe 37) has sufficiently been discharged. According to one embodiment, ballast water treatment control unit 111 can determine that the untreated water has sufficiently been discharged once a fixed period of time has elapsed since the second starting process was started and the discharged water flow rate's integral has also reached a defined value. The defined value for the integrated flow rate can be previously determined based on the length of the pipe from ultraviolet irradiation device 23 to water discharge port 24 and the diameter of that pipe. When either one of the period of time having elapsed since the second starting process was started and the integral of the discharged water flow rate satisfies a condition, ballast water treatment control unit 111 may determine that the untreated water has sufficiently be discharged.

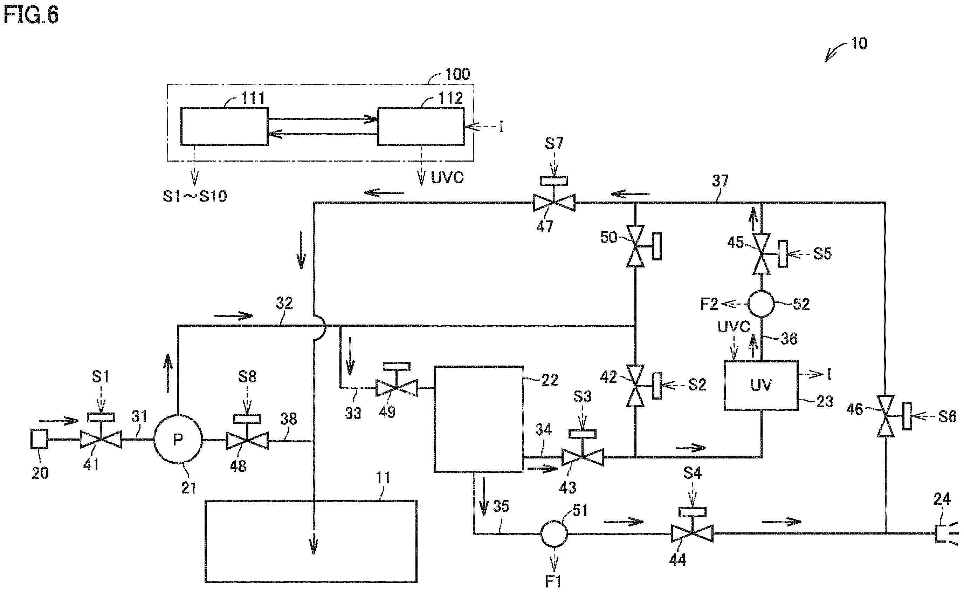

Fig. 6 illustrates switching from a third starting process to filling a tank with water. With reference to Fig. 6, when ballast water treatment control unit 111 determines that the untreated water has sufficiently be discharged, ballast water treatment control unit 111 closes valve 46 and opens valve 47. This starts filling tank 11 with water.

When the destination of the ballast water after ultraviolet irradiation is switched from water discharge port 24 to tank 11, the flow rate of the ballast water may vary with fluctuation of back pressure. For example, in a state in which ship 1 sinks more deeply, switching from water discharge port 24 to tank 11 results in ballast water easily increasing in flow rate. When the ballast water increases in flow rate, the dose of ultraviolet rays is reduced, and accordingly, there is a possibility that the calculated dose may be below the prescribed value.

According to one embodiment while discharging water from water discharge port 24 overboard, control unit 100 (ballast water treatment control unit 111) can reduce the flow rate of the water that is discharged through the second path to be smaller than the rated value of the flow rate of the water that is stored to tank 11 through the first path. For example, the flow rate of the water that passes through the second path can be set to 80% of the rated value of the flow rate of the water that passes through the first path. In addition, after filling tank 11 with water is started before ballast water's flow rate stabilizes, control unit 100 (ultraviolet irradiation control unit 112) may maintain the output of the ultraviolet lamp at a 100% output. More specifically, the ultraviolet lamp is controlled to provide a maximized output. By controlling at least one of the flow rate and the output of and the ultraviolet lamp, as described above, dose D can be prevented from being below the prescribed value. For example, when the flow rate of the ballast water falls within a range including the rated value (e.g., a range of ±5% of the rated value), the flow rate of the ballast water is stabilized.

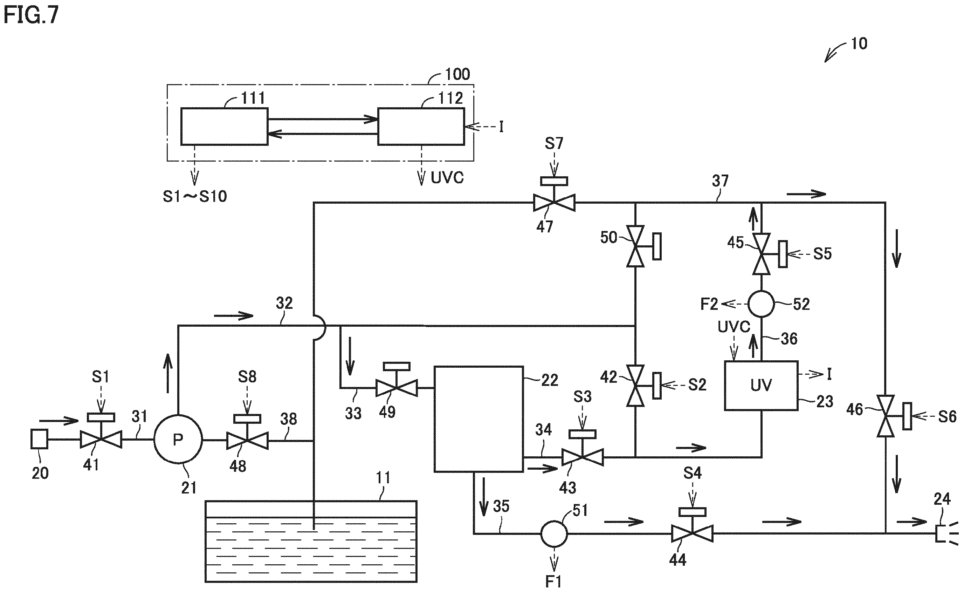

After filling tank 11 with water is completed, a first ending process is performed. Fig. 7 illustrates the first ending process in filling a tank with water. With reference to Fig. 7, ballast water treatment control unit 111 opens valves 46 and also closes valve 47. More specifically, the control switches from filling tank 11 with water to discharging water overboard. After that, ultraviolet irradiation control unit 112 stops ultraviolet irradiation device 23 (or turns off the ultraviolet lamp). This can prevent untreated water (i.e., sea water untreated with ultraviolet rays) from being introduced into tank 11.

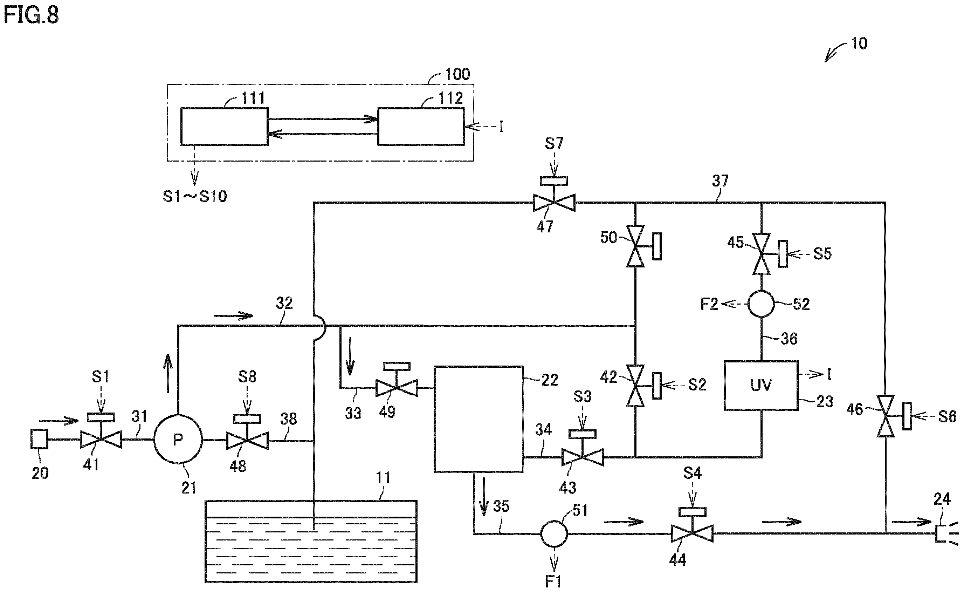

Subsequently, a second ending process is performed. Fig. 8 illustrates the second ending process in filling a tank with water. With reference to Fig. 8, ballast water treatment control unit 111 closes valves 43, 45, and 46 to interrupt a filtration line of filtration device 22. The entire amount of the sea water taken via sea chest 20 passes through a water discharging line (pipe 35) of filtration device 22 and the filter of filtration device 22 is thus washed. Once the filter has been washed, ballast water treatment control unit 111 stops ballast pump 21 and also closes all of the valves. This stops ballast water treatment system 10.

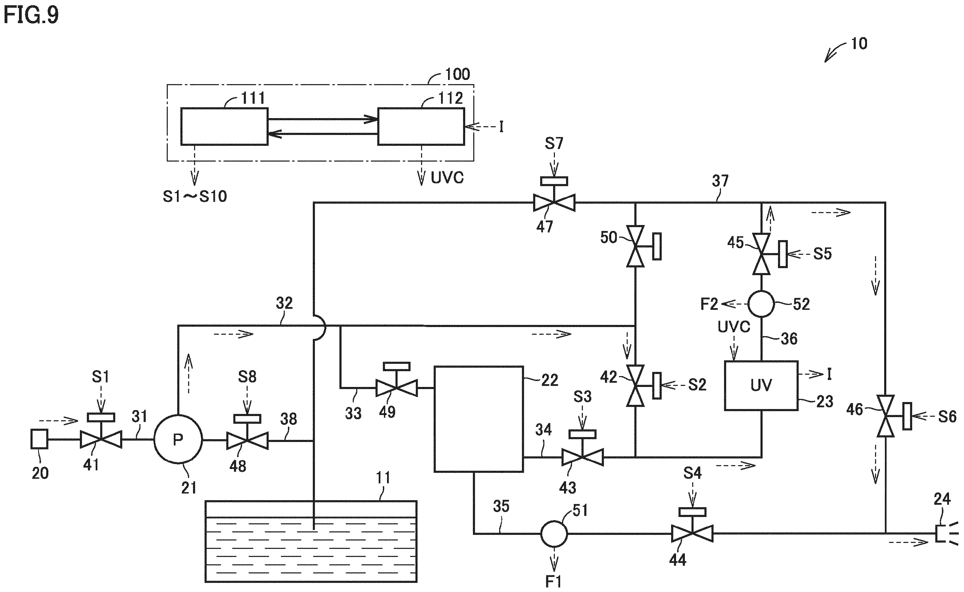

Subsequently, a water discharging process for discharging ballast water from the tank will be described in details. Fig. 9 illustrates a first starting process in discharging water. With reference to Fig. 9, ballast water treatment control unit 111 opens valves 41, 42, 45 and 46, and also operates ballast pump 21. Valves 43, 44, 47-50 are in the closed state. Ultraviolet irradiation control unit 112 turns on the ultraviolet lamp of ultraviolet irradiation device 23. Sea water is taken from a sea area via sea chest 20. The sea water passes through pipes 31, 32 and 34, and is sent to ultraviolet irradiation device 23.

When discharging ballast water from tank 11 is started before the dose of ultraviolet rays reaches the prescribed dose, the ballast water may be discharged to a sea area while the ballast water is insufficiently detoxicated by ultraviolet rays. Accordingly, the first starting process is performed until dose D calculated based on illuminance I and flow rate F2 reaches the prescribed dose. Ballast water treatment control unit 111 can operate in response to the measured flow rate F2 to control the flow rate of the filtrated water flowing through ultraviolet irradiation device 23 to be the prescribed flow rate.

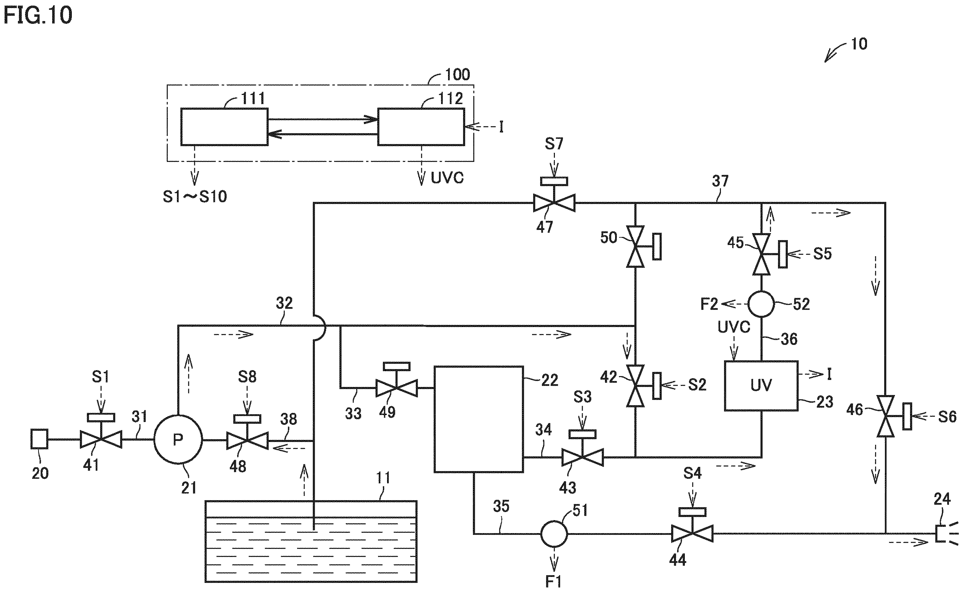

The process shown in Fig. 9 is followed by a second starting process. Fig. 10 illustrates the second starting process in discharging water. With reference to Fig. 10, after the calculated dose reaches the prescribed value, ballast water treatment control unit 111 closes valve 41 and also opens valve 48. This starts discharging water from tank 11. Ultraviolet irradiation device 23 irradiates the ballast water that is discharged from tank 11 with ultraviolet rays.

As well as in the process for filling a tank with water, when discharging water from tank 11 is started, the flow rate of the ballast water may vary with fluctuation of back pressure. When the flow rate is increased, the dose is reduced, and accordingly, there is a possibility that the calculated dose may be below the prescribed value. Accordingly, as well as in controlling in filling a tank with water, control unit 100 (ballast water treatment control unit 111) can reduce the flow rate of the sea water that is pumped up from a sea area to be smaller than the rated value of the flow rate of the ballast water that is discharged from tank 11. For example, the flow rate of the sea water that is pumped up from a sea area can be set to 80% of the rated value of the flow rate of the water that passes through the first path.

In addition, before the flow rate of the ballast water discharged from tank 11 stabilizes, control unit 100 (ultraviolet irradiation control unit 112) can maintain the output of the ultraviolet lamp at the 100% output. By controlling at least one of the flow rate and the output of the ultraviolet lamp, as described above, dose D can be prevented from being below the prescribed value.

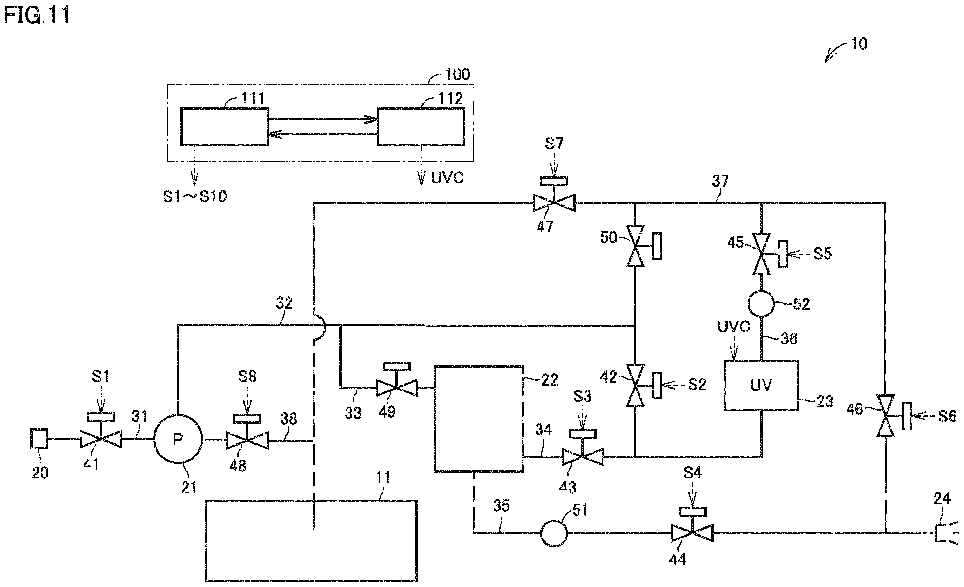

After discharging water from tank 11 is completed, an ending process is performed. Fig. 11 illustrates the ending process in discharging water. With reference to Fig. 11, ballast water treatment control unit 111 stops ballast pump 21. Ultraviolet irradiation control unit 112 stops ultraviolet irradiation device 23 (or turns off the ultraviolet lamp). Subsequently, ballast water treatment control unit 111 closes all of the valves. This stops ballast water treatment system 10.

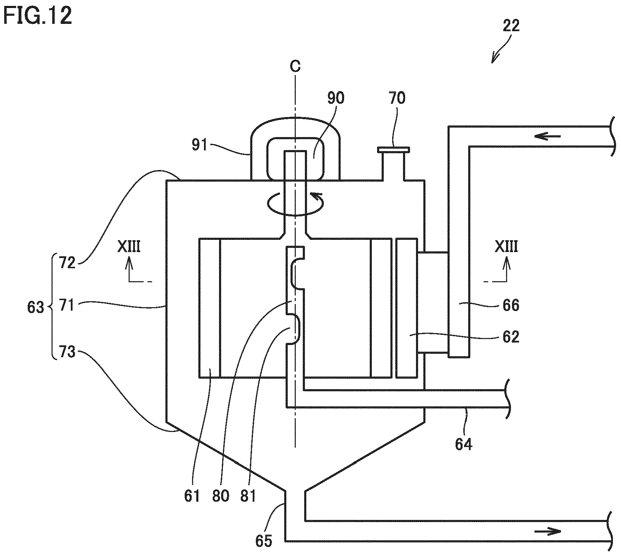

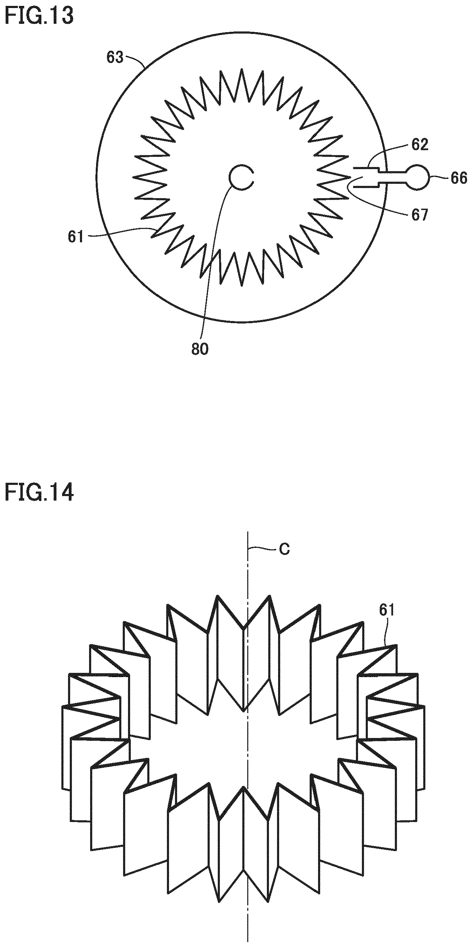

Fig. 12 illustrates an exemplary configuration of filtration device 22 shown in Fig. 2. Fig. 13 is a cross section taken along a line VIII-VIII shown in Fig. 12. With reference to Fig. 12 and Fig. 13, water to be treated (ballast water) passes from pipe 33 (see Fig. 2 and Fig. 3) through a channel for water to be treated 66 and is thus supplied into a case 63. Inside case 63, a cylindrical filter 61 is provided. An axis C shows a central axis of filter 61 (a cylinder). In other words, filter 61 is disposed to surround axis C.

A motor 90 is connected to the central shaft of filter 61. Motor 90 is supplied with electric power from a drive device (not shown) to cause filter 61 to rotate about axis C. Motor 90 is covered with a motor cover 91.

Filter 61 has its cylindrical top and bottom surfaces closed to be watertight. Although a rotatable attachment structure is also required to have a watertight structure, a known structure is used without a particular limitation.

Case 63 covers filter 61 entirely. Case 63 has an outer casing 71, a lid 72, and a bottom 73. Bottom 73 is provided with a discharge channel 65 connected to pipe 35 (see Fig. 2 and Fig. 3). Inside case 63, in order to introduce water to be treated, channel 66 for water to be treated and a nozzle 62 for water to be treated are provided.

According to the configuration shown in Fig. 12, case 63 has lid 72 with an agent introduction port 70. Note, however, it is not essential to provide case 63 with the agent introduction port.

Nozzle 62 for water to be treated is configured to extend from channel 66 for water to be treated. Nozzle 62 for water to be treated has a tip with a nozzle mouth 67. Nozzle mouth 67 is disposed inside outer casing 71 of case 63. Nozzle mouth 67 is formed such that water to be treated flows out through nozzle mouth 67 toward an outer circumferential surface of filter 61.

A center pipe 80 is disposed on axis C. Center pipe 80 is connected to a filtrated water channel 64. Filtrated water channel 64 is connected to pipe 34 (see Fig. 2 and Fig. 3). Note that center pipe 80 does not rotate.

Fig. 14 is a perspective schematic view for illustrating a representative configuration of filter 61 shown in Fig. 12. With reference to Fig. 13 and Fig. 14, filter 61 is a pleated filter. A based member in the form of a flat strip is folded to form a ridge and a trough alternately to form pleats. The pleated base material has opposite ends connected together to form a cylindrical pleated filter.

The filter's base material is a porous resin sheet. As a material of the porous resin sheet, for example, a porous structure of a drawn porous body, a phase-separated porous body, a nonwoven fabric, etc. of polyester, nylon, polyethylene, polypropylene, polyurethane, polytetrafluoroethylene (PTFE), polyvinylidene fluoride (PVdF), etc., is utilized. In order to perform a filtration process at a high flow rate, a nonwoven fabric of polyester such as polyethylene terephthalate is particularly suitably used.

Again with reference to Fig. 12 and Fig. 13, the ballast water passes through channel 66 for water to be treated and jets out from nozzle mouth 67 of nozzle 62 for water to be treated. The ballast water which jets out from nozzle mouth 67 permeates from an exterior of the cylinder of filter 61 into an interior of the cylinder. The ballast water is thus filtrated. The ballast water filtrated by permeating through filter 61 is guided via a water intake hole 81 that is provided to center pipe 80 to filtrated water channel 64, and thus flows out of filtration device 22.

In contrast, water which has not been filtrated by filter 61 and a suspended matter content which precipitates on bottom 73 of case 63 are discharged outside filtration device 22 via discharge channel 65. Thus, filtration is done while the suspended matter content or remaining water is continuously discharged. Thus, a throughput required as an amount of ballast water treated (for example, 10-20 tons/hour, furthermore, 100 tons/hour) can be ensured.

In the above operation, a suspended matter such as a living thing or particles adheres to the outer circumferential surface of filter 61. According to the configuration shown in Fig. 12, motor 90 rotates filter 61. Water jetting out from nozzle mouth 67 to be treated impinges on the outer circumferential surface of filter 61 while filter 61 rotates. By the pressure of the water to be treated and a rotating water stream, a water stream is constantly generated on the outer circumferential surface of filter 61. This facilitates removing a suspended matter content adhering to filter 61. More specifically, according to this embodiment, filter 61 can be washed while ballast water is filtrated.

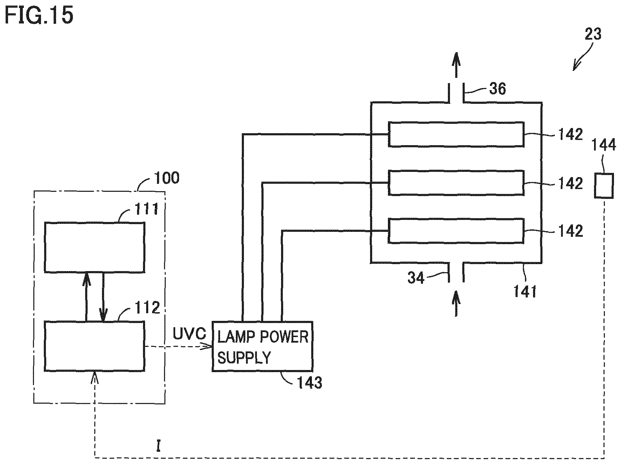

Fig. 15 is a diagram showing an exemplary configuration of ultraviolet irradiation device 23 shown in Fig. 2. With reference to Fig. 15, ultraviolet irradiation device 23 includes a case 141, an ultraviolet lamp 142 as a light source, a lamp power supply 143, and an illuminance sensor 144.

Case 141 is connected to pipe 34 and pipe 36 and accommodates ultraviolet lamp 142. The ballast water flows through pipe 34 into case 141 of ultraviolet irradiation device 23 and flows out into pipe 36. More specifically, ultraviolet irradiation device 23 is provided to the ballast water treatment line.

Ultraviolet lamp 142 irradiates the ballast water that passes through case 141 with ultraviolet rays. Turning on and off ultraviolet lamp 142, and the dose of ultraviolet rays emitted by ultraviolet lamp 142 and received by the ballast water, are controlled by a signal UVC issued from ultraviolet irradiation control unit 112.

Illuminance sensor 144 senses the illuminance of ultraviolet rays received by the ballast water. Illuminance sensor 144 transmits a signal indicative of illuminance I sensed (unit: W/m²) to ultraviolet irradiation control unit 112.

Ultraviolet irradiation control unit 112 controls electric power supplied to ultraviolet lamp 142, based on dose D calculated using illuminance I of ultraviolet rays sensed by illuminance sensor 144 and flow rate F2 sensed by flowmeter 52 (the flow rate of the ballast water which flows through ultraviolet irradiation device 23). In one embodiment, ultraviolet irradiation control unit 112 indicates to lamp power supply 143 a proportion relative to a maximum value of electric power supplied to ultraviolet lamp 142. Lamp power supply 143 supplies ultraviolet lamp 142 with electric power according to the indicated proportion. Note that lamp power supply 143 may be included in ultraviolet irradiation control unit 112.

Illuminance I of ultraviolet rays measured by illuminance sensor 144 varies with the transmittance of the ballast water. When the ballast water has a lower transmittance, the ballast water transmits a smaller amount of ultraviolet rays. Accordingly illuminance I sensed by illuminance sensor 144 decreases, and dose D calculated from illuminance I and flow rate F2 decreases. When the dose of ultraviolet rays is reduced, an effect of killing a microorganism which lives in the ballast water may decrease.

For example, a turbidity by sand or mud contained in the ballast water, or a colored component affects the transmittance of the ballast water. Accordingly, the transmittance of the ballast water can depend on the place (or sea area) where ballast water is taken. Furthermore, even when ballast water is taken in the same sea area, the transmittance of the ballast water may vary with a factor such as the weather or climate when the ballast water is taken.

Accordingly, ultraviolet irradiation control unit 112 controls electric power supplied to ultraviolet lamp 142 so that dose D obtained from illuminance I sensed by illuminance sensor 144 and flow rate F2 sensed by flowmeter 52 is maintained at the prescribed value. This prescribed value is a value determined for example through a preliminary experiment. However, there is an upper limit for electric power which may be supplied from lamp power supply 143 to ultraviolet lamp 142. The upper limit depends for example on a rating of the ultraviolet irradiation device (as one example, a rating of lamp power supply 143 or a rating of ultraviolet lamp 142).

When sea water taken as ballast water has low transmittance, there is a possibility that even if maximum power is supplied to ultraviolet lamp 142, dose D obtained from illuminance I sensed by illuminance sensor 144 and flow rate F2 sensed by flowmeter 52 is below the prescribed value. In an embodiment of the present invention, ultraviolet irradiation control unit 112 controls ultraviolet irradiation device 23 so that dose D obtained from illuminance I sensed by illuminance sensor 144 and flow rate F2 sensed by flowmeter 52 is maintained at the prescribed dose. When dose D sensed cannot be maintained at the prescribed dose by controlling ultraviolet irradiation device 23, control unit 100 (ballast water treatment control unit 111) reduces the flow rate of the ballast water which flows through the treatment line (i.e., a treatment flow rate).

By reducing the treatment flow rate, dose D can be increased even when ballast water has low transmittance and illuminance sensor 144 senses low illuminance I. In other words, the dose of ultraviolet rays received by the ballast water can be increased. Thus even when ballast water has low transmittance the prescribed dose of ultraviolet rays can be achieved. Accordingly, even when ballast water has low transmittance, an effect of killing a microorganism can be maintained.

Hereinafter, for each embodiment, how the treatment flow rate is controlled will be described in detail. Note that the numerical values indicated hereinafter are indicated by way of example to help understanding each embodiment, and they are not intended to limit the present invention. Furthermore, each embodiment described hereinafter is not limited to one of filling a tank with water and discharging water, and is applicable to a control required to ensure the prescribed dose.

### <First Embodiment>

In the first embodiment, a treatment flow rate is corrected based on dose D obtained from illuminance I sensed by illuminance sensor 144 and flow rate F2 sensed by flowmeter 52. Note that, in the first embodiment, ballast water treatment system 10 is configured such that the treatment flow rate can be controlled steplessly (or seamlessly). For example, the treatment flow rate can be controlled steplessly by applying a proportional control valve to valves 44 and 45.

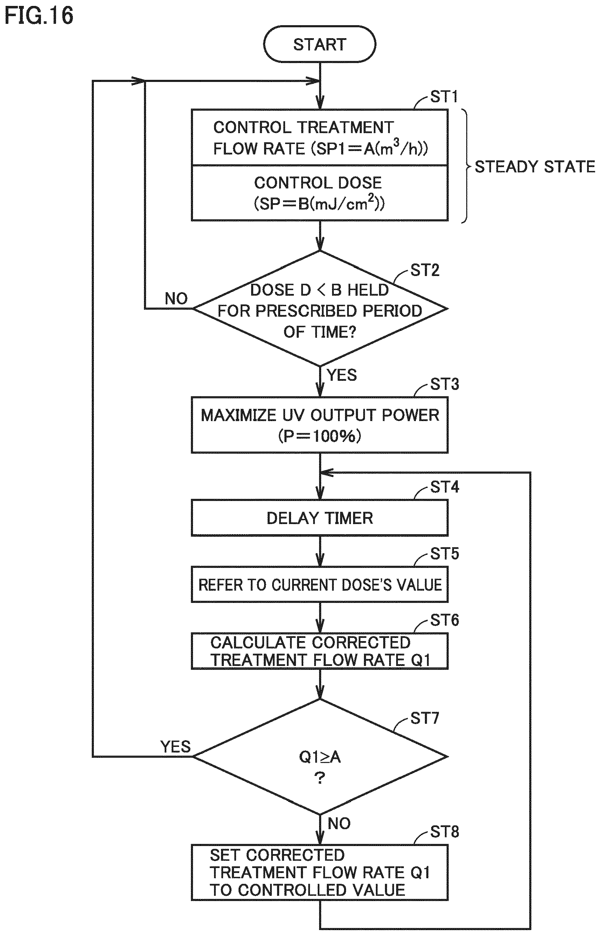

Fig. 16 is a flowchart for illustrating how a treatment flow rate is controlled according to the first embodiment. The control described in Fig. 16 is applicable to both control in filling a tank with water and that in discharging water. With reference to Fig. 16, ballast water treatment system 10 starts a process. For example, a starting process is performed. In step ST1, a ballast water treatment reaches a steady state. Note, however, that in step ST1 ballast water treatment system 10 is not limited to the steady state. The process of Fig. 16 is also applicable to the second starting process in filling a tank with water (see Fig. 5).

A parameter SP1 is a parameter used for controlling a treatment flow rate. Ballast water treatment control unit 111 stores a value A of parameter SP 1 and also controls a treatment flow rate according to parameter SP1. Specifically, ballast water treatment control unit 111 controls the degree of opening of valve 45 so that value F2 of a treatment flow rate sensed by flowmeter 52 matches value A of parameter SP 1. For example, A = 250 (m³/h).

A parameter SP is a parameter used for controlling a dose. Ultraviolet irradiation control unit 112 stores a value B of parameter SP and also controls a dose of ultraviolet rays according to parameter SP. Specifically, ultraviolet irradiation control unit 112 controls electric power supplied from lamp power supply 143 to ultraviolet lamp 142 so that dose D obtained from illuminance I sensed by illuminance sensor 144 shown in Fig. 15 and flow rate F2 sensed by flowmeter 52 matches value B of parameter SP. For example, B = 100 (mJ/cm²). Note that ballast water treatment control unit 111 may obtain parameter SP's value from ultraviolet irradiation control unit 112 to control a treatment flow rate.

In step ST2, whether dose D obtained from illuminance I of ultraviolet rays sensed by illuminance sensor 144 and flow rate F2 sensed by flowmeter 52 is less than parameter SP's value (= B) (i.e., D < B) for a prescribed period of time, is determined. This process is performed by ultraviolet irradiation control unit 112, for example. Note that hereinafter dose D obtained from illuminance I of ultraviolet rays sensed by illuminance sensor 144 and flow rate F2 sensed by flowmeter 52 will be referred to as a "calculated dose D." As has been set forth above, calculated dose D is calculated by an expression: D = K x I/F2, where K is a coefficient.

When ultraviolet irradiation control unit 112 detects that calculated dose D is below value B, ultraviolet irradiation control unit 112 measures a period of time for which D < B. Step ST2 corresponds to the step of determining whether calculated dose D is maintained at prescribed dose (B). The prescribed period of time is for example 30 seconds.

When D < B is held for a period of time less than the prescribed period of time (NO in step ST2), the process returns to step ST1. D < B being held for a period of time less than the prescribed period of time corresponds to ultraviolet irradiation control unit 112 controlling ultraviolet irradiation device 23 to maintain calculated dose D at prescribed dose B.

When D < B is held for the prescribed period of time (YES in step ST2), the process proceeds to step ST3. D < B being held for the prescribed period of time corresponds to calculated dose (D) being unmaintainable at prescribed dose (B) by controlling ultraviolet irradiation device (23). Accordingly, as will be described below, a process is performed to reduce the treatment flow rate of ballast water which flows through the treatment line (more specifically, pipes 34 and 35).

In step ST3, ultraviolet irradiation device 23's output power (UV output power) is maximized. Ultraviolet irradiation control unit 112 sets a ratio P of an actual output voltage relative to a maximum value of an output power of lamp power supply 143 to 100%. In other words, lamp power supply 143 supplies ultraviolet lamp 142 with maximum output power. Thus ultraviolet lamp 142 emits ultraviolet rays having a maximum intensity.

In step ST4, ultraviolet irradiation control unit 112 operates a delay timer. For example, the delay timer's set time is 2 minutes (120 seconds). Note that for the period set by the delay timer, ultraviolet irradiation device 23 outputs maximized power (UV power).

In step ST5, ultraviolet irradiation control unit 112 calculates the current dose's value (calculated dose D) from illuminance sensor 144 and flowmeter 52. Ultraviolet irradiation control unit 112 transmits the calculated value to ballast water treatment control unit 111. Thus, ballast water treatment control unit 111 refers to the current dose's value.

In step ST6, ballast water treatment control unit 111 calculates a corrected treatment flow rate Q1 based on the current dose's value. In one embodiment, ballast water treatment control unit 111 calculates corrected treatment flow rate Q1 according to a function which associates calculated dose D with corrected treatment flow rate Q1. This function decreases corrected treatment flow rate Q1 when calculated dose D decreases.

The function which associates calculated dose D with corrected treatment flow rate Q1 can be a function which smoothly varies corrected treatment flow rate Q1 in response to dose D. In one embodiment, ballast water treatment control unit 111 calculates corrected treatment flow rate Q1 from dose D according to a function allowing corrected treatment flow rate Q1 to be in inverse proportion to dose D. This function can be represented, for example as Q1 = B/D x A + b. For example, b is a negative constant.

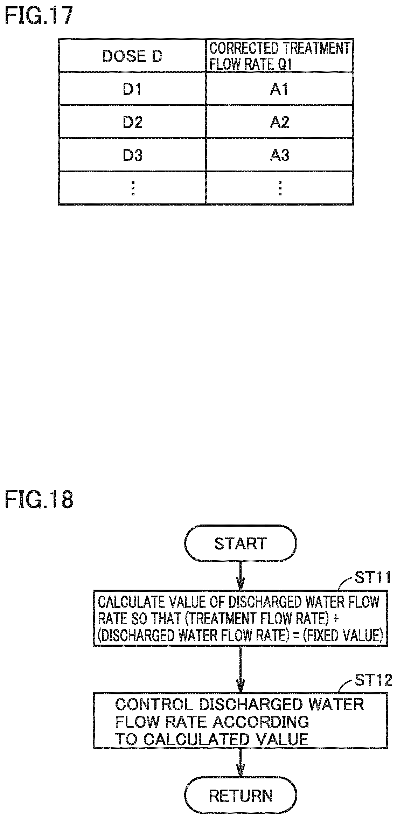

Furthermore, ballast water treatment control unit 111 may store data of corrected treatment flow rate Q1 associated with dose D. Fig. 17 is a schematic diagram showing data of a corrected treatment flow rate stored in ballast water treatment control unit 111. As indicated in Fig. 17, corrected treatment flow rate Q1 have values (A1, A2, A3, ...) associated with dose D (D1, D2, D3, ...). The data indicated in Fig. 17 can be stored in ballast water treatment control unit 111 for example in the form of a table or a database. Dose D (D1, D2, D3, ...) and the corrected treatment flow rate Q1 values (A1, A2, A3, ...) may be determined so that corrected treatment flow rate Q1 varies substantially smoothly with variation of dose D. The association between dose D (D1, D2, D3, ...) and the corrected treatment flow rate Q1 values (A1, A2, A3, ...) can be previously obtained for example through a preliminary experiment.

Returning to Fig. 16, in step ST7, ballast water treatment control unit 111 determines whether corrected treatment flow rate Q1 is equal to or greater than value A of the treatment flow rate in the steady state (Q1 ≥ A). When corrected treatment flow rate Q1 is equal to or greater than value A of the treatment flow rate in the steady state (YES in step ST7), the control returns to step ST1.

When the process returns to step ST1, ballast water treatment control unit 111 controls the treatment flow rate according to parameter SP1. Ultraviolet irradiation control unit 112 controls a dose of ultraviolet rays according to parameter SP. In that case, the treatment flow rate is controlled to be A (m³/h) and the dose is controlled to be B (mJ/cm²). Note that the UV output power is reduced from the maximum value (P = 100%).

In contrast, when corrected treatment flow rate Q1 is less than value A (NO in step ST7), the process proceeds to step ST8. In step ST8, ballast water treatment control unit 111 sets corrected treatment flow rate Q1 to a value of a treatment flow rate parameter SP1' and controls the treatment flow rate according to parameter SP1'. At this time, the UV output power is still the maximum value (P = 100%).

Step ST8 corresponds to the step of varying ballast water's treatment flow rate depending on dose D as sensed. After step ST8, the process returns to step ST4. Until corrected treatment flow rate Q1 becomes equal to or greater than value A, steps ST4 to ST8 are repeated. A state with steps ST4 to ST8 repeated is a state with ballast water having low transmittance. By step ST8, the treatment flow rate is reduced to be smaller than value A. This can increase the dose of ultraviolet rays received by the ballast water. By appropriately determining a function which associates corrected treatment flow rate Q1 with calculated dose D, even when ballast water has low transmittance, a dose of ultraviolet rays required to kill a microorganism is ensured. In particular, the UV output power having a maximum value (P = 100%) allows a maximum ballast water flow rate allowing the prescribed dose to be maintained in ultraviolet irradiation device 23 constantly for any transmittance.

In contrast, for example when the transmittance of the ballast water gradually increases, then, dose D's calculated value increases while steps ST4 to ST8 are repeated. In step ST6, corrected treatment flow rate Q1's calculated value is equal to or greater than A. Note that at the time while dose D has a value equal to or greater than B, the actual treatment flow rate is equal to or less than A.

In that case, the control returns from step ST7 to step ST1 to control the treatment flow rate to be A. In other words, the treatment flow rate is increased. As the treatment flow rate is increased, there is a possibility that dose D calculated may be reduced. However, the immediately previous value of dose D is larger than B, and even when the treatment flow rate is set to A, the value of the dose can be maintained at B. When the treatment flow rate returns to A and thereby dose D exceeds value B, ultraviolet irradiation control unit 112 controls ultraviolet irradiation device 23 to maintain dose D at value B.

Furthermore, in this embodiment, in filling a tank with water, in addition to the treatment flow rate, the discharged water flow rate of filtration device 22 is also controlled. Fig. 18 is a flowchart for describing how the discharged water flow rate of filtration device 22 is controlled in filling a tank with water. The process indicated in this flowchart is mainly performed by ballast water treatment control unit 111. Note that the process indicated in Fig. 18 may be performed periodically as determined.

With reference to Fig. 18, in step ST11, ballast water treatment control unit 111 calculates a discharged water flow rate so that a total of the treatment flow rate and the discharged water flow rate is a fixed value. In step ST12, ballast water treatment control unit 111 controls a discharged water flow rate according to the value of the calculated discharged water flow rate. For example, ballast water treatment control unit 111 controls the degree of opening of valve 44 so that flow rate F1 measured by flowmeter 51 matches the value of the discharged water flow rate calculated in step ST11.

When filling a tank with water, filtration device 22 filtrates ballast water by filter 61 and at the same time washes filter 61 (see Fig. 12). When the discharged water flow rate is fixed and the treatment flow rate is reduced, the amount of sea water which flows into filtration device 22 decreases. When the amount of sea water which flows into filtration device 22 decreases, the ability to wash filter 61 may be impaired.

However, according to the flow indicated in Fig. 18, the discharged water flow rate varies in response to the treatment flow rate. More specifically, the discharged water flow rate is controlled so that a total of the treatment flow rate and the discharged water flow rate is a fixed value. Accordingly, the amount of sea water which flows into filtration device 22 can be fixed while the treatment flow rate is reduced. Thus the ability to wash filter 61 can be maintained. As a result, a filtration performance by filtration device 22 can also be maintained.

Thus, according to the first embodiment, when calculated dose D cannot maintain prescribed dose (B), the treatment flow rate is reduced. Calculated dose D (more specifically, an actual dose) can thus be increased. If ballast water to be purified has varied in transmittance, reduction of a dose of ultraviolet rays can be suppressed. As a result, the dose of ultraviolet rays can be maintained at at least the prescribed dose.

Furthermore, according to the first embodiment, depending on calculated dose D, a treatment flow rate is varied smoothly. This allows the treatment flow rate to be finely controlled, and hence optimally in response to calculated dose D.

### <Second Embodiment>

In the first embodiment, a treatment flow rate can be smoothly varied in response to calculated dose D. In a second embodiment a plurality of treatment flow rate levels are previously determined, and, of the plurality of levels, a treatment flow rate level corresponding to calculated dose D is determined. A treatment flow rate is controlled to have a value corresponding to the determined level. In an embodiment described hereinafter, three treatment flow rate levels, i.e., " high," "medium," and "low" levels, are set previously. Note, however, the number of levels may be any number larger than one, and it is not limited to three.

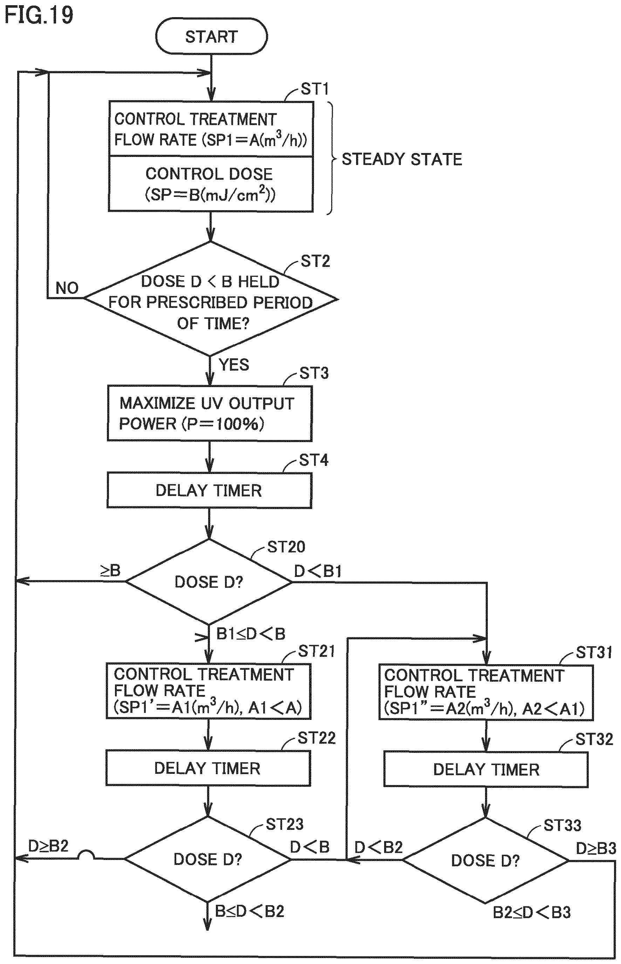

Fig. 19 is a flowchart for illustrating how a treatment flow rate is controlled according to the second embodiment. The control described in Fig. 19 is applicable to both control in filling a tank with water and that in discharging water. With reference to Fig. 19, steps ST1 to ST4 are identical to the corresponding steps indicated in Fig. 16. Furthermore, in step ST1, ballast water treatment system 10 is not limited to the steady state. As well as in the first embodiment, the process of Fig. 19 is also applicable to the second starting process in filling a tank with water (see Fig. 5). After step ST4 the control proceeds to step ST20.

In step ST20, whether dose D calculated from illuminance I sensed by illuminance sensor 144 and flow rate F2 sensed by flowmeter 52 (D = K x I/F2, where K is a coefficient) satisfies any one of the following three criteria, is determined. The three criteria are associated with the three treatment flow rate levels, respectively. In other words, the three criteria for calculated dose D correspond to conditions for determining a treatment flow rate's level.

A first criterion is that calculated dose D is equal to or greater than value B of parameter SP of the steady state (D ≥ B). The first criterion is a condition for controlling a treatment flow rate's level to be the "high" level. Accordingly, when the first criterion is satisfied, the control returns to step ST1. In that case, the treatment flow rate is controlled to have value A of parameter SP1.

A second criterion is that calculated dose D is smaller than value B of parameter SP in the steady state and equal to or greater than a first threshold value B1 (B1 ≤ D < B). For example, B1 = 80 (mJ/cm²). The second criterion is a condition for controlling a treatment flow rate's level to be the "medium" level.

When the second criterion is satisfied, the control proceeds to step ST21. In step ST21, the treatment flow rate is controlled. Specifically, treatment flow rate parameter SP1' has a value set to A1 (m³/h). Flow rate A1 is smaller than flow rate A (i.e., A1 < A). As done in step ST1, ballast water treatment control unit 111 controls the degree of opening of valve 45 so that value F2 of the treatment flow rate sensed by flowmeter 52 matches value A1 of parameter SP1'. For example, A1 = 200 (m³/h).

A third criterion is that calculated dose D is less than first threshold value B1 (i.e., D < B1). The third criterion is a condition for controlling a treatment flow rate's level to be the "low" level.

When the third criterion is satisfied, the control proceeds to step ST31. In step ST31, the treatment flow rate is controlled. Specifically, a treatment flow rate parameter SP1" is set to a value of A2 (m³/h). Flow rate A2 is smaller than flow rate A1 (i.e., A2 < A1). As done in steps ST1 and ST21, ballast water treatment control unit 111 controls the degree of opening of valve 45 so that value F2 of the treatment flow rate sensed by flowmeter 52 matches value A2 of parameter SP1". For example, A2 = 150 (m³/h).

Step ST 21 is followed by step ST22, in which ultraviolet irradiation control unit 112 operates the delay timer. For example, the delay timer's set time is 2 minutes (120 seconds).

In step ST23, whether dose D calculated from illuminance I sensed by illuminance sensor 144 and flow rate F2 sensed by flowmeter 52 satisfies any of the following three criteria (fourth to sixth criteria), is determined

The fourth criterion is that calculated dose D is equal to or greater than a second threshold value B2 (i.e., D ≥ B2). The fourth criterion is a condition for controlling a treatment flow rate's level to be the "high" level. Accordingly, when the fourth criterion is satisfied, the process returns to step ST1. For example, B2 = 120 (mJ/cm²).

The fifth criterion is that calculated dose D is smaller than second threshold value B2 and equal to or greater than value B of parameter SP in the steady state (i.e., B ≤ D < B2). The fifth criterion is a condition for controlling a treatment flow rate's level to be the "medium" level. Accordingly, when the fifth criterion is satisfied, the process returns to step ST21.

The sixth criterion is that calculated dose D is less than value B of parameter SP in the steady state (i.e., D < B). The sixth criterion is a condition for controlling a treatment flow rate's level to be the "low" level. Accordingly, when the fifth criterion is satisfied, the process proceeds to step ST31.

Similarly, step ST 31 is followed by step ST32, in which ultraviolet irradiation control unit 112 operates the delay timer. For example, the delay timer's set time is 2 minutes (120 seconds).

In step ST33, whether calculated dose D satisfies any of the following three criteria (seventh to ninth criteria), is determined

The seventh criterion is that calculated dose D is equal to or greater than a third threshold value B3 (i.e., D ≥ B3). The seventh criterion is a condition for controlling a treatment flow rate's level to be the "high" level. Accordingly, when the seventh criterion is satisfied, the process returns to step ST1. For example, B3 = 160 (mJ/cm²).

The eighth criterion is that calculated dose D is smaller than third threshold value B3 and equal to or greater than the second threshold value (i.e., B2 ≤ D < B3). The eighth criterion is a condition for controlling a treatment flow rate's level to be the "medium" level. Accordingly, when the eighth criterion is satisfied, the process proceeds to step ST21.

The ninth criterion is that calculated dose D is less than second threshold value B2 (i.e., D < B2). The ninth criterion is a condition for controlling a treatment flow rate's level to be the "low" level. Accordingly, when the ninth criterion is satisfied, the process returns to step ST31.

Step ST20, ST23 and ST33 are each performed by ballast water treatment control unit 111. In step ST20, ST23 and ST33, ultraviolet irradiation control unit 112 obtains the current dose's value (i.e., calculated dose D) from illuminance sensor 144 and flowmeter 52. Ultraviolet irradiation control unit 112 transmits the calculated value to ballast water treatment control unit 111. Thus, ballast water treatment control unit 111 refers to the current dose's value.

As has been described above, in step ST20, when calculated dose D is smaller than the value of dose parameter SP in the steady state (= B), a treatment flow rate is reduced in step ST21 or step ST31. More specifically, the treatment flow rate is reduced when calculated dose D cannot be maintained at prescribed dose B by controlling ultraviolet irradiation device 23. Thus, as well as in the first embodiment, a dose of ultraviolet rays can be maintained at the prescribed dose for killing a microorganism.

Furthermore, in the second embodiment, a treatment flow rate is varied stepwise. This allows the treatment flow rate to be controlled more simply than the first embodiment.

Furthermore, in the second embodiment, the value of dose D for recovering (i.e., increasing) a treatment flow rate is larger than that of dose D for reducing the treatment flow rate. The value of dose D for varying a treatment flow rate's level from "high" to "medium" is value B, whereas the value of dose D for recovering a treatment flow rate's level from "medium" to "high" is second threshold value B2 (> B). The value of dose D for varying a treatment flow rate's level from "medium" to "low" is value B, whereas the value of dose D for recovering a treatment flow rate's level from "medium" to "high" is second threshold value B2 (> B). The value of dose D for varying a treatment flow rate's level from "high" to "low" is value B1, whereas the value of dose D for recovering a treatment flow rate's level from "low" to "high" is third threshold value B3 (> B1). In other words, depending on a value of dose (D) calculated from illuminance (I) and flow rate (F2) (= A, A1, or A2), whether a treatment flow rate is decreased or increased can be determined in order to provide an appropriate flow rate while maintaining a prescribed dose (a previously set reference dose).

By thus increasing a value of dose D for recovering a treatment flow rate, reduction of a dose of ultraviolet rays can be suppressed even after the treatment flow rate is recovered.

Note that in the second embodiment also, in filling a tank with water, in addition to the treatment flow rate, the discharged water flow rate of filtration device 22 is also controlled. The discharged water flow rate is controlled according to the flow indicated in Fig. 18.

In each of the above embodiments, water obtained as ballast water is sea water. However, a ballast water treatment system and method according to an embodiment of the present invention can also be used for a ballast water purification process when water taken as ballast water is fresh water or brackish water.

A ballast water treatment system according to this embodiment includes features indicated in the following appended notes:

### [appended note 1]

A ballast water treatment system for treating ballast water for a ship, comprising:
a filtration device which filtrates the ballast water which flows through a treatment line;
an ultraviolet irradiation device which irradiates with ultraviolet rays the ballast water filtrated by the filtration device, the ultraviolet irradiation device including
   a light source emitting the ultraviolet rays, and
   a sensor sensing an illuminance of the ultraviolet rays received by the ballast water; and
a control unit,
the control unit controlling the ultraviolet irradiation device to maintain at a prescribed dose a dose calculated using the illuminance and a flow rate of the ballast water flowing through the ultraviolet irradiation device, and when the calculated dose cannot be maintained at the prescribed dose by controlling the ultraviolet irradiation device, the control unit reducing a treatment flow rate of the ballast water flowing through the treatment line.

### [appended note 2]

A ballast water treatment system for treating ballast water for a ship, comprising:
an ultraviolet irradiation device irradiating with ultraviolet rays the ballast water flowing through a treatment line, the ultraviolet irradiation device including
   a light source emitting the ultraviolet rays, and
   a sensor sensing an illuminance of the ultraviolet rays received by the ballast water;
a valve provided to the treatment line for varying the ballast water's treatment flow rate; and
a control unit controlling the valve,
the control unit controlling the ultraviolet irradiation device to maintain at a prescribed dose a dose calculated using the illuminance and a flow rate of the ballast water flowing through the ultraviolet irradiation device, and when the calculated dose cannot be maintained at the prescribed dose by controlling the ultraviolet irradiation device, the control unit controlling the valve to reduce a treatment flow rate of the ballast water flowing through the treatment line.

### [appended note 3]

A ballast water treatment system for treating ballast water for a ship, comprising:
a filtration device which filtrates the ballast water which flows through a treatment line;
an ultraviolet irradiation device which irradiates with ultraviolet rays the ballast water filtrated by the filtration device, the ultraviolet irradiation device including
   a light source emitting the ultraviolet rays, and
   a sensor sensing an illuminance of the ultraviolet rays received by the ballast water;
a valve provided to the treatment line for varying the ballast water's treatment flow rate; and
a control unit controlling the valve,
the control unit controlling the ultraviolet irradiation device to maintain at a prescribed dose a dose calculated using the illuminance and a flow rate of the ballast water flowing through the ultraviolet irradiation device, and when the calculated dose cannot be maintained at the prescribed dose by controlling the ultraviolet irradiation device, the control unit controlling the valve to reduce a treatment flow rate of the ballast water flowing through the treatment line.

### [appended note 4]

A ballast water treatment system for treating ballast water for a ship, comprising:
an ultraviolet irradiation device irradiating water flowing through a treatment line with ultraviolet rays, the ultraviolet irradiation device including
   a light source emitting the ultraviolet rays, and
   a sensor sensing an illuminance of the ultraviolet rays received by the water flowing through the treatment line;
a filtration device which is connected to the treatment line, filtrates the water, and supplies the filtrated water to the ultraviolet irradiation device;
a first path for guiding the water that has been treated by the ultraviolet irradiation device to a tank for storing the ballast water;
a second path for discharging the water from the ultraviolet irradiation device to outside the ship;
a first valve (47) for switching a path of the water between the first path and the second path; and
a control unit,
when starting a process for filling the tank with the ballast water, the control unit controlling the ultraviolet irradiation device so that a dose calculated using an illuminance sensed by the sensor and a flow rate of the water reaches a prescribed dose,
before the calculated dose reaches the prescribed dose, the control unit controlling the first valve so that the water passes through the second path, once the calculated dose has reached the prescribed dose, the control unit controlling the first valve so that the water passes through the first path,
once the water has passed through the second path for a fixed period of time and when the calculated dose cannot be maintained at the prescribed dose, the control unit reducing the treatment flow rate of the water treated by the ultraviolet irradiation device.

### [appended note 5]

The ballast water treatment system according to appended note 4, the filtration device including
a filter cylindrically disposed to surround an axis, provided to rotate about the axis as desired, and filtrating the water,
a nozzle provided for water to be treated, and causing the water to flow out to an outer peripheral portion of the filter,
a filtrated water channel connected to the treatment line for supplying the filtrated water to the ultraviolet irradiation device,
a discharge channel connected to the second path for discharging water which is not filtrated by the filter, and
a motor for rotating the filter about the axis,
the ballast water treatment system further comprising a second valve (43) provided to the filtrated water channel of the filtration device, wherein:
when starting the process for filling the tank with the water, the control unit, before controlling the ultraviolet irradiation device, closes the second valve for a fixed period of time so that the water that flows out of the nozzle for water to be treated washes the filter of the filtration device and also flushes a pipe passing the water; and
once the fixed period of time has passed the control unit opens the second valve.

### [appended note 6]

The ballast water treatment system according to appended note 5, wherein:
when starting the process for filling the tank with the water, once the calculated dose has reached the prescribed dose and when at least one of a period of time for which the water is passed through the second path and an integral of the flow rate of the water discharged from the second path satisfies a prescribed condition, the control unit controls the first valve so that the water passes through the first path;
the control unit controls the water's flow rate so that a flow rate when the water passes through the second path is smaller than a rated value of the flow rate when the water passes through the first path; and
the control unit maximizes the light source's output after the path of the water is switched to the first path from the second path before the water's flow rate stabilizes.

### [appended note 7]

The ballast water treatment system according to appended note 5 or 6, wherein when ending the process for filling the tank with the water, the control unit controls the first valve to switch the path of the water to the second path from the first path, and thereafter stops the ultraviolet irradiation device.

### [appended note 8]

The ballast water treatment system according to appended note 7, wherein after the control unit stops the ultraviolet irradiation device, the control unit closes the second valve to wash the filter of the filtration device, and after the filter is washed, the control unit stops the ballast water treatment system.

### [appended note 9]

The ballast water treatment system according to any one of appended notes 4-8, wherein:
when starting a process for discharging the ballast water from the tank, the control unit turns on the light source; and
before the calculated dose reaches the prescribed dose the ultraviolet irradiation device irradiates the water obtained from the surroundings of the ship with ultraviolet rays and once the calculated dose has reached the prescribed dose the ultraviolet irradiation device irradiates the ballast water that is discharged from the tank with the ultraviolet rays.

### [appended note 10]

The ballast water treatment system according to appended note 9, wherein:
the control unit controls the flow rate of the water so that the flow rate of the water pumped up from a sea area surrounding the ship is smaller than a rated value of the flow rate of the ballast water discharged from the tank; and
the control unit maximizes the light source's output until the flow rate of the ballast water discharged from the tank stabilizes.

### [appended note 11]

The ballast water treatment system according to appended note 9 or 10, wherein when ending the process for discharging the water from the tank, the control unit stops a pump for discharging the ballast water from the tank and subsequently the control unit stops the ultraviolet irradiation device and also closes all of valves including the first valve.

It should be understood that the embodiments disclosed herein have been described for the purpose of illustration only and in a non-restrictive manner in any respect. The scope of the present invention is defined by the terms of the claims, rather than the embodiments described above, and is intended to include any modifications within the meaning and scope equivalent to the terms of the claims.

### REFERENCE SIGNS LIST

1: ship; 2: sea area; 10: ballast water treatment system; 11: tank; 20: sea chest; 21: ballast pump; 22: filtration device; 23: ultraviolet ray irradiation device; 24: water discharge port; 31-38: pipe; 41-50: valve; 51, 52: flowmeter; 61: filter; 62: nozzle for water to be treated; 63141: case; 64: filtrated water channel; 65: discharge channel; 66: channel for water to be treated; 67: nozzle mouth; 70: agent introduction port; 71: outer casing; 72: lid; 73: bottom; 80: center pipe; 81: water intake hole; 90: motor; 91: motor cover; 100: control unit; 111: ballast water treatment control unit; 112: ultraviolet irradiation control unit; 142: ultraviolet lamp; 143: lamp power supply; 144: illumination sensor; C: axis; ST1-ST8, ST11, ST12, ST20-ST23, ST31-ST33: step.

## Claims

1. A ballast water treatment system for treating ballast water in a ship, comprising:
an ultraviolet irradiation device irradiating the ballast water flowing through a treatment line with ultraviolet rays, the ultraviolet irradiation device including
a light source emitting the ultraviolet rays, and
a sensor sensing an illuminance of the ultraviolet rays received by the ballast water; and
a control unit, the control unit controlling the ultraviolet irradiation device such that a dose which is calculated using the illuminance sensed by the sensor and a flow rate of the ballast water flowing through the ultraviolet irradiation device is maintained at a prescribed dose, and the control unit decreasing a treatment flow rate of the ballast water flowing through the treatment line if the control unit is unable to maintain the calculated dose at the prescribed dose by controlling the ultraviolet irradiation device.

2. The ballast water treatment system according to claim 1, wherein the control unit varies the treatment flow rate of the ballast water depending on the calculated dose.

3. The ballast water treatment system according to claim 1 or 2, wherein when the control unit reduces the treatment flow rate of the ballast water, the control unit maximizes an output of the ultraviolet irradiation device.

4. The ballast water treatment system according to any one of claims 1 to 3, wherein the control unit varies the treatment flow rate seamlessly.

5. The ballast water treatment system according to any one of claims 1 to 3, wherein the control unit determines, based on the calculated dose, a level of the treatment flow rate among a plurality of levels, and controls the treatment flow rate to be a flow rate corresponding to the determined level.

6. The ballast water treatment system according to claim 5, wherein the control unit determines whether the treatment flow rate is decreased or increased to maintain the calculated dose at the prescribed dose.

7. The ballast water treatment system according to any one of claims 1 to 6, further comprising:
a filtration device provided to the treatment line and filtrating the ballast water supplied to the ultraviolet irradiation device, wherein the filtration device includes:
a filter cylindrically disposed to surround an axis, provided to rotate about the axis as desired, and filtrating the ballast water;
a nozzle provided for water to be treated, and causing the ballast water to flow out to an outer peripheral portion of the filter;
a filtrated water channel for supplying the ultraviolet irradiation device with the ballast water having been filtrated by the filter;
a discharge channel for discharging water which is not filtrated by the filter; and
a motor for rotating the filter about the axis, wherein
the control unit varies a discharged water flow rate of water that flows through the discharge channel, depending on the treatment flow rate.

8. The ballast water treatment system according to claim 7, wherein the control unit varies the discharged water flow rate such that a total of the treatment flow rate and the discharged water flow rate is fixed.

9. A ballast water treatment method treating ballast water for a ship by using an ultraviolet irradiation device provided to a treatment line for the ballast water and including a light source emitting ultraviolet rays and a sensor sensing an illuminance of the ultraviolet rays received by the ballast water, the method comprising:
controlling the ultraviolet irradiation device to maintain at a prescribed dose a dose calculated using an illuminance sensed by the sensor and a flow rate of the ballast water flowing through the ultraviolet irradiation device; and
reducing a treatment flow rate of the ballast water flowing through the treatment line, when the calculated dose cannot be maintained at the prescribed dose by controlling the ultraviolet irradiation device.
